# EUROPÄISCHE PATENTSCHRIFT

(11) **EP 1 310 009 B1**
(45) Veröffentlichungstag und Bekanntmachung des Hinweises auf die Patenterteilung: **21.02.2007**
(21) Anmeldenummer: 01956380.8
(22) Anmeldetag: 21.07.2001
(51) Int. Cl.: H01M 8/24

(54) **BRENNSTOFFZELLENSTAPEL**
FUEL CELL STACK
EMPILEMENT DE PILES A COMBUSTIBLE

(30) Priorität: 19.08.2000 DE 10040654
(43) Veröffentlichungstag der Anmeldung: 14.05.2003
(73) Patentinhaber: Forschungszentrum Jülich GmbH, 52425 Jülich (DE)
(72) Erfinder: DOHLE, Hendrik, 52224 Stolberg-Mausbach (DE); BEWER, Thomas, 52068 Aachen (DE)
(86) Internationale Anmeldenummer: PCT/DE2001/002829
(87) Internationale Veröffentlichungsnummer: WO 2002/017417

(56) Entgegenhaltungen:
- WO-A-99/53559
- US-A- 5 116 696
- PATENT ABSTRACTS OF JAPAN vol. 1995, no. 09, 31. Oktober 1995 (1995-10-31) & JP 07 153480 A (TOSHIBA CORP), 16. Juni 1995 (1995-06-16)

## Beschreibung

### Technisches Gebiet

Die Erfindung betrifft einen Brennstoffzellenstapel, insbesondere für Niedertemperatur-Brennstoffzellen.

### Stand der Technik

Eine Brennstoffzelle weist eine Kathode, einen Elektrolyten sowie eine Anode auf. Der Kathode wird ein Oxidationsmittel, z. B. Luft und der Anode wird ein Brennstoff, z. B. Wasserstoff zugeführt.

Verschiedene Brennstoffzellentypen sind bekannt, so beispielsweise die SOFC-Brennstoffzelle aus der Druckschrift DE 44 30 958 C1 sowie die PEM-Brennstoffzelle aus der Druckschrift DE 195 31 852 C1.

Mehrere Brennstoffzellen werden in der Regel zur Erzielung großer elektrischer Leistungen durch verbindende Elemente elektrisch und mechanisch miteinander verbunden. Ein Beispiel für ein solches verbindendes Element stellt die aus DE 44 10 711 C1 bekannte bipolare Platte dar. Mittels bipolarer Platten entstehen übereinander gestapelte, elektrisch in Serie geschaltete Brennstoffzellen. Diese Anordnung wird Brennstoffzellenstapel genannt.

Durch Schaffung von gemeinsamen Anoden- und Kathodenräumen für jeweils zwei Brennstoffzellen läßt sich der Bauraum für einen Brennstoffzellenstapel gegenüber einzelnen Brennstoffzellen deutlich reduzieren.

Vorteilhaft werden dafür in einem Brennstoffzellenstapel zwei Zellen gemeinsam, d. h. paarweise in je einen Zellrahmen eingesetzt. Mehrere hintereinander geschaltete Zellrahmen, die extern kontaktiert werden, bilden dann einen Brennstoffzellenstapel.

Bislang sind für die Zellrahmen und auch die bipolaren Platten regelmäßig aufwendige Strukturen notwendig, die eine gewisse Mindestbaugröße voraussetzen und kompliziert in der Herstellung sind. Neben der elektrischen Kontaktierung sind auch die jeweiligen Betriebsmittelzu- und -abführungen zu beachten.

Aus WO 98/13 891 ist eine bipolare Platte für eine Brennstoffzelle beschrieben, die im wesentlichen aus zahlreichen planaren Bauteilen besteht. Nachteilig erfordert diese bipolare Platte aufwendige Dichtungsmaßnahmen zwischen den einzelnen Bauteilen. Sie bildet ein Schichtsystem mit einer Dicke von ca. 3 mm.

Es hat sich bei dieser Ausführung ebenfalls als nachteilig herausgestellt, daß sowohl die Anoden- und die Kathodenräume, als auch die Betriebsstoffe führenden Kanäle abgedichtet werden müssen. Aufgrund der kompakten Ausführungsform von Brennstoffzellenstapeln werden hierfür typischerweise jeweils Flachdichtungen eingesetzt, die erhöhte Anforderungen an die Oberfläche der Bauteile hinsichtlich Rauhigkeit und Fertigungsgenauigkeit stellen, und somit regelmäßig zu höheren Fertigungskosten führen.

### Aufgabe und Lösung

Aufgabe der Erfindung ist es, einen Brennstoffzellenstapel zu schaffen, der eine sehr kompakte Bauweise ermöglicht und die oben aufgeführten Nachteile nicht aufweist.

Die Aufgabe der Erfindung wird gelöst durch einen Brennstoffzellenstapel gemäß Hauptanspruch. Vorteilhafte Ausführungsformen für den Brennstoffzellenstapel ergeben sich aus den darauf rückbezogenen Ansprüchen.

### Darstellung der Erfindung

Der Brennstoffzellenstapel nach Anspruch 1 umfaßt wenigstens drei benachbarte Elemente, die zur Bildung eines durchgängigen Kanals jeweils einen Durchbruch aufweisen. Weiterhin sind die Durchbrüche der außen liegenden Elemente kleiner als die Durchbrüche der innen liegenden Elemente, bzw. des innen liegenden Elements. Zur Abdichtung des gebildeten Kanals zwischen den außen liegenden Elementen ist lediglich eine Dichtung vorgesehen.

Als Elemente im Sinne dieser Erfindung sind insbesondere Rahmenelemente mit Gasverteilerstrukturen oder zur Aufnahme einer Membran-Elektroden-Anordnung, bipolare Platten oder auch Flachdichtungen, die durch entsprechende Aussparungen einen Elektrodenraum zu schaffen vermögen, zu verstehen. Diese Elemente sind in einem Brennstoffzellenstapel typischerweise benachbart, d. h. schichtförmig nebeneinander angeordnet. Zur Bildung eines durchgängigen Kanals in den Elementen, insbesondere zur Zu- und/oder Ableitung eines Betriebsmittels, weisen diese Elemente entsprechende Durchbrüche auf. Erfindungsgemäß ist dabei der Durchbruch der innen liegenden Elemente, bzw. des innen liegenden mittleren Elements größer als die der zwei außen liegenden Elemente. Der durch die Durchbrüche der Elemente gebildete Kanal wird durch eine einzige Dichtung abgedichtet. Dabei liegt diese Dichtung erfindungsgemäß nur zwischen den außen liegenden Elementen. Der Durchbruch des mittleren Elements (innen liegend) weist einen so großen Durchmesser auf, daß die zwischen den außen liegenden Elementen angeordnete Dichtung innerhalb des Durchbruchs des mittleren Elementes zu liegen kommt. Auf eine Abdichtung des innen liegenden Elements gegenüber den beiden benachbarten Elementen kann so vorteilhaft verzichtet werden.
Diese Anordnung bewirkt, daß gegenüber dem bisherigen Stand der Technik, bei dem im Bereich des Durchbruchs jedes einzelne Element zu seinem benachbarten Element abgedichtet wurde, auf eine Dichtung verzichtet werden kann. Damit kann der Brennstoffzellenstapel vorteilhaft entsprechend kompakter aufgebaut werden. Die benötigte Schichtdicke einer einzelnen Brennstoffzelle und damit des gesamten Brennstoffzellenstapels, kann somit regelmäßig reduziert werden.

Bei mehr als drei Elementen lassen sich nicht nur eine, sondern entsprechend viele zusätzliche Dichtungen einsparen. Die vorteilhafte Reduzierung in der Schichtdicke für eine einzelne Brennstoffzelle wächst mit jeder eingesparten Dichtung an.

In einer vorteilhaften Ausführungsform der Erfindung weisen die außen liegenden Elemente Durchbrüche mit gleichem Durchmesser auf. Diese Durchbrüche bilden regelmäßig einen Teil des Kanals für die Betriebsstoffe. Diese können vorteilhaft einheitliche Durchmesser aufweisen, um Strömungs- und Druckveränderungen aufgrund unterschiedlicher Geometrien zu vermeiden.

Vorteilhaft weisen auch alle innen liegenden Elemente identische Durchmesser für ihre Durchbrüche auf. Diese Durchmesser sollten so groß gewählt werden, daß eine zwischen die außen liegenden Elemente eingesetzte Dichtung so bemessen werden kann, daß ihr Innendurchmesser dem der Durchbrüche der außen liegenden Elemente entspricht. Dies bewirkt vorteilhaft einen nahezu reibungslosen Übergang von Dichtung auf Durchbruch innerhalb des Kanals für die Betriebsstoffe.

Vorteilhaft weist die Schichtdicke einer Brennstoffzelleneinheit des erfindungsgemäßen Brennstoffzellenstapels nur eine Schichtdicke von weniger als 2 mm auf, insbesondere von weniger als 1,5 mm. Unter der Schichtdicke einer Brennstoffzelleneinheit ist im Rahmen der Erfindung der bauseitige Abstand von einer Membran-Elektroden-Anordnung (MEA) zur nächsten zu verstehen. Im Fall von seriell hintereinander geschalteten Brennstoffzellen besteht eine Brennstoffzelleneinheit aus einer Membran, einer Kathode, dem Kathodenraum, einer bipolaren Platte, dem Anodenraum und der Anode. Im Fall von Brennstoffzellen, bei denen jeweils zwei gleiche Elektroden benachbart angeordnet sind, besteht eine Einheit z. B. aus einer Membran, einer Kathode, dem Kathodenraum und noch einer Kathode.

Vorteilhaft wird als Dichtung in dem erfindungsgemäßen Brennstoffzellenstapel eine Runddichtung in Form eines O-Rings eingesetzt. Ein O-Ring stellt nicht so hohe Anforderungen an die Oberflächenbeschaffenheit wie eine Flachdichtung und ist einfacher zu handhaben. Ein geeignetes Material für eine O-Ring Dichtung ist beispielsweise EPDM, welches sehr beständig ist. Allgemein handelt es sich bei O-Ring Dichtungen um sehr elastische Dichtungen. Zudem ist sie kostengünstiger. Eine O-Ring Dichtung ist nicht so flach herzustellen, wie eine Flachdichtung, aber durch Einsparungen an Dichtungen kann dieser Nachteil mehr als kompensiert werden. Damit ist es beispielsweise mit Hilfe eines O-Rings als Dichtung regelmäßig möglich, Schichtdicken für eine Brennstoffzelleneinheit von weniger als 2 mm, insbesondere weniger als 1,5 mm, zu realisieren.

Besonders effektiv kann die Schichtdicke reduziert werden, wenn in einem Brennstoffzellenstapel möglichst viele der Betriebsmittelkanäle derart abgedichtet werden. Vorteilhaft weist daher ein Brennstoffzellenstapel Elemente mit wenigstens zwei, insbesondere aber mit vier Durchbrüchen für die Bildung von Betriebsmittelkanälen auf. Jeweils diagonal in einem Element angeordnet bewirken sie eine optimale Verteilung der Betriebsmittel in den Elektrodenräumen.

Zusätzliche Durchbrüche in einigen Elementen, insbesondere den Flachdichtungen, bewirken vorteilhaft eine einfache elektrische Kontaktierung zwischen zwei nicht direkt benachbarten Elementen. Der Kontakt zwischen diesen Elementen erfolgt nicht außerhalb der Elemente, sondern durch geeignete Mittel direkt zwischen ihnen. Ein solches geeignetes Mittel ist eine aus der Ebene eines ersten Elements ausgeklappte leitfähige Lasche. Durch den entsprechenden Durchbruch in dem benachbarten zweiten Element kommt es zu keinem Kontakt mit diesem Element. Erst das weitere, dritte Element, welches keinen Durchbruch an der entsprechenden Stelle aufweist, wird durch die Lasche kontaktiert, so daß auf einfache Weise eine elektrische Verbindung zwischen dem ersten und dritten, nicht aber zu dem mittleren Element besteht.

### Spezieller Beschreibungsteil

Im Nachfolgenden wird die Erfindung anhand von Figuren näher erläutert, ohne daß dadurch der Gegenstand der Erfindung eingeschränkt wird. Es zeigen
- Figur 1:: a) Schematischer Querschnitt dreier benachbarter, durch Dichtungen getrennter Elemente gemäß Stand der Technik, die einen gemeinsamen, durchgehenden Kanal aufweisen.
b) Schematischer Querschnitt eines Ausführungsbeispiels der Erfindung dreier benachbarter, durch eine Dichtung getrennte Elemente, die einen gemeinsamen, durchgehenden Kanal aufweisen.
- Figur 2:: Schematischer Querschnitt durch einen erfindungsgemäßen Brennstoffzellenstapel.
- Figur 3:: 1. Ausführungsbeispiel
a) Explosionszeichnung einer Membran-Elektroden-Einheit mit benachbarten Gasverteilerstrukturen,
b) Explosionszeichnung einer Membran-Elektroden-Einheit mit benachbarten Gasverteilerstrukturen und Mitteln zur elektrischen Kontaktierung,
c) Explosionszeichnung eines aus 3a) und b) Einheiten aufgebauten Brennstoffzellenstapels.

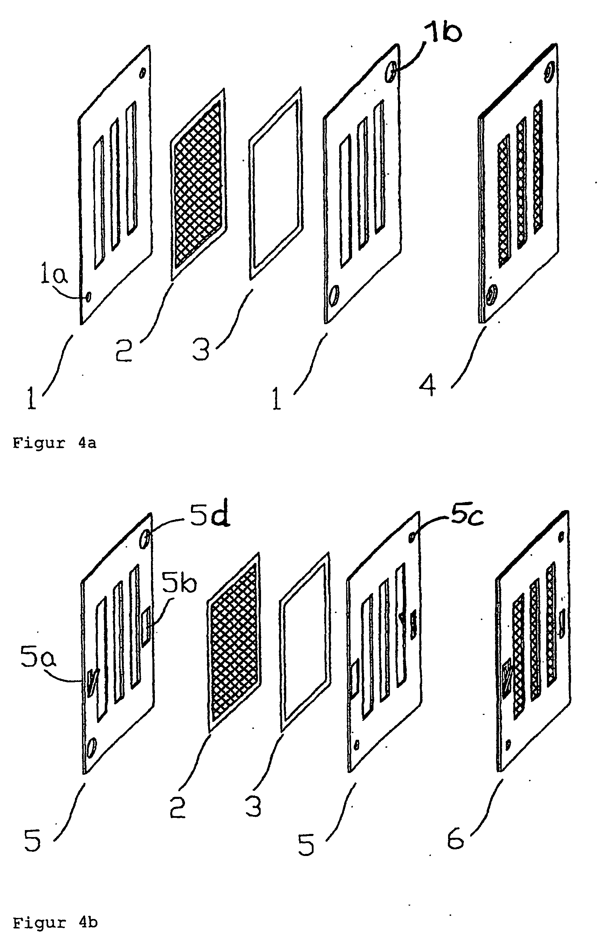

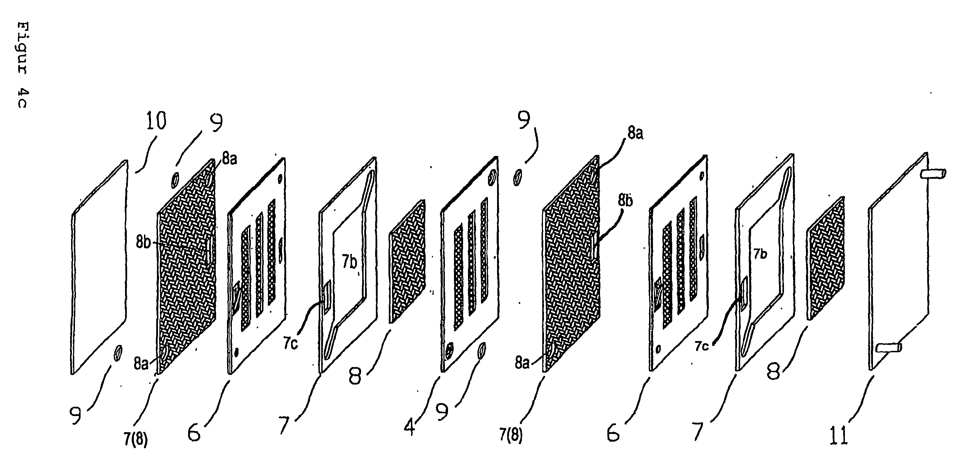

- Figur 4:: 2. Ausführungsbeispiel
a) Explosionszeichnung einer Membran-Elektroden-Einheit mit benachbarten Gasverteilerstrukturen,
b) Explosionszeichnung einer Membran-Elektroden-Einheit mit benachbarten Gasverteilerstrukturen und Mitteln zur elektrischen Kontaktierung,
c) Explosionszeichnung eines aus 4a) und b) Einheiten aufgebauten Brennstoffzellenstapels.

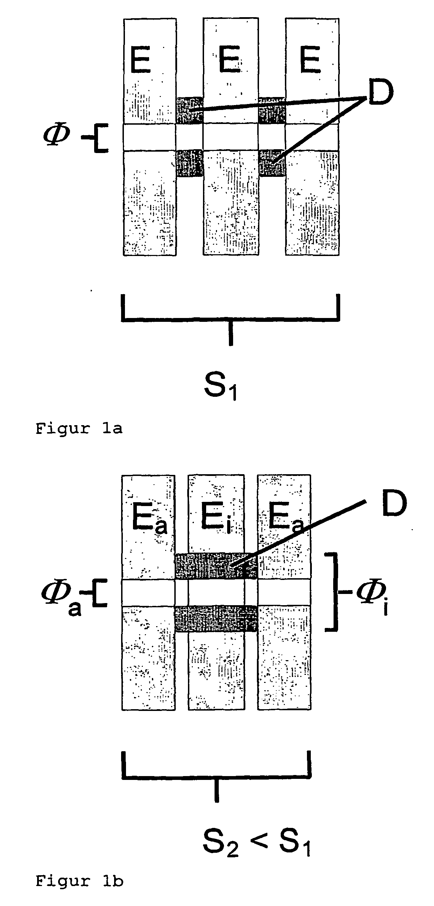

Die Figur 1a zeigt schematisch einen Ausschnitt aus einem Brennstoffzellenstapel gemäß dem Stand der Technik, bestehend aus drei Elementen E, z. B. Rahmenelementen oder bipolare Platten. Diese Elemente weisen jeweils einen Durchbruch mit dem Durchmesser Ø auf und bilden so einen durchgängigen Kanal. Jedes Element wird beispielsweise durch eine ringförmige Dichtung D um den Durchbruch zum benachbarten Element abgedichtet. Bislang üblich sind als Dichtungen dabei die sogenannten Flachdichtungen, die vorteilhaft sehr dünn sind, jedoch erhöhte Anforderungen an die Oberfläche der Elemente bezüglich Rauhigkeit und Fertigungsgenauigkeit stellen.

In der Figur 1b wird ebenfalls schematisch ein Ausschnitt eines Brennstoffzellenstapels, diesmal in einer erfindungsgemäßen Ausführung, dargestellt. Die drei benachbarten Elemente Eₐ, Eᵢ, Eₐ weisen Durchbrüche zur Bildung eines durchgängigen Kanals auf. Der Durchmesser Øᵢ des Durchbruchs des innen liegenden Elements Eᵢ ist jedoch größer als die Durchmesser Øₐ der Durchbrüche der außen liegenden Elemente Eₐ. Damit wird vorteilhaft durch eine einzige Dichtung D der Kanal zwischen den außen liegenden Elementen abgedichtet.

Da auf diese Art eine Dichtung eingespart wird, kann auf eine aufwendige Flachdichtung verzichtet und statt dessen z. B. ein einfacher O-Ring als Dichtung vorgesehen werden. Obwohl die einzelne Dichtung (D in Figur 1b) selbst dicker ausfällt als eine Flachdichtung (D in Figur 1a), ist in dieser Ausführungsform der Erfindung die Schichtdicke S₂ der drei Elemente im Vergleich zum Stand der Technik S₁ regelmäßig reduziert. Dies bietet für den Bau eines Brennstoffzellenstapels besondere Vorteile. Je mehr Elemente durch die erfindungsgemäße Art der Abdichtung verbunden werden, desto größer ist der Gewinn durch die Verringerung der Schichtdicken.

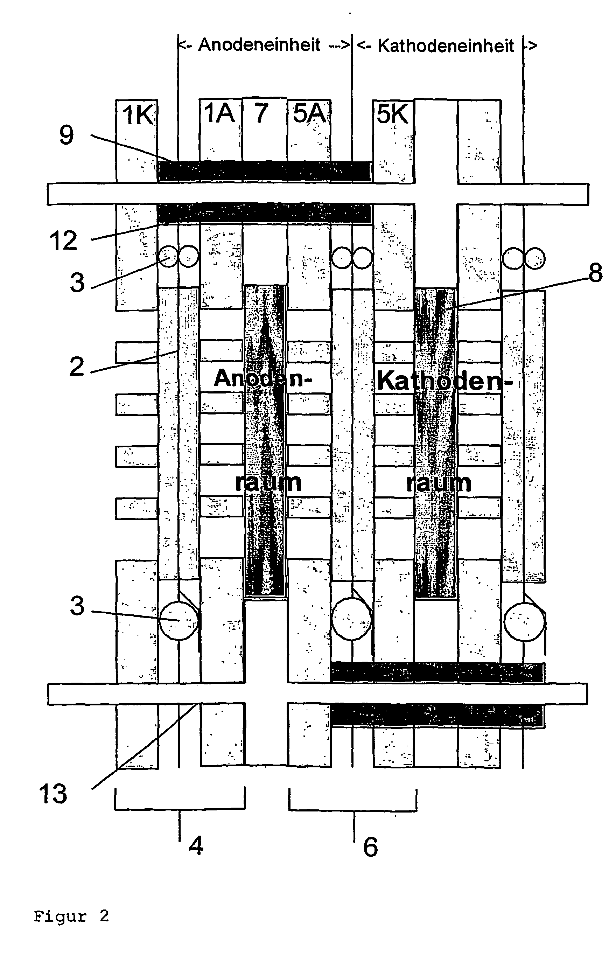

Die Figur 2 verdeutlicht ein Ausführungsbeispiel des erfindungsgemäßen Brennstoffzellenstapels, bei dem jeweils ein Elektrodenraum an zwei identische Elektroden grenzt. Ein Elektrodenraum wird gebildet durch zwei elektrisch leitende Elemente mit Gasverteilerstrukturen 1, 5 und eine dazwischen befindliche Flachdichtung 7. Nach außen wird jeweils ein Elektrodenraum durch zwei benachbarte Membran-Elektroden-Anordnungen (MEAs) 2 begrenzt. Diese werden durch eine oder zwei entsprechende Dichtungen 3 gegenüber den benachbarten Elementen abgedichtet und elektrisch isoliert.

Die einzelnen Elemente 1, 5, 7 weisen jeweils zwei Durchbrüche zur Bildung eines Brennstoff- und eines Oxidationsmittelkanals auf. Der Teil des Oxidationsmittelkanals 12, der vom Durchbruch des Elements 1K einer Kathodeneinheit zum benachbarten kathodischen Element 5K führt, wird lediglich durch eine Dichtung 9 zu den dazwischenliegenden anodischen Elementen 1A, 7 und 5A abgedichtet.

Dabei ist die Bezeichnung außen liegendes und innen liegendes Element nicht absolut zu sehen, sondern bezieht sich auf den jeweiligen zu bildenden Kanal. In Bezug auf den Oxidationsmittelkanal 12 bilden die Elemente mit Gasverteilerstruktur 5A und 1A der Anodeneinheit innen liegende Elemente, dessen Durchbrüche anspruchsgemäß größer sind als die der außen liegenden Elemente der benachbarten Kathodeneinheit. In Bezug auf den Brennstoffmittelkanal 13 bilden jedoch dieselben Elemente 5A, 1A der Anodeneinheit nun außen liegende Elemente.

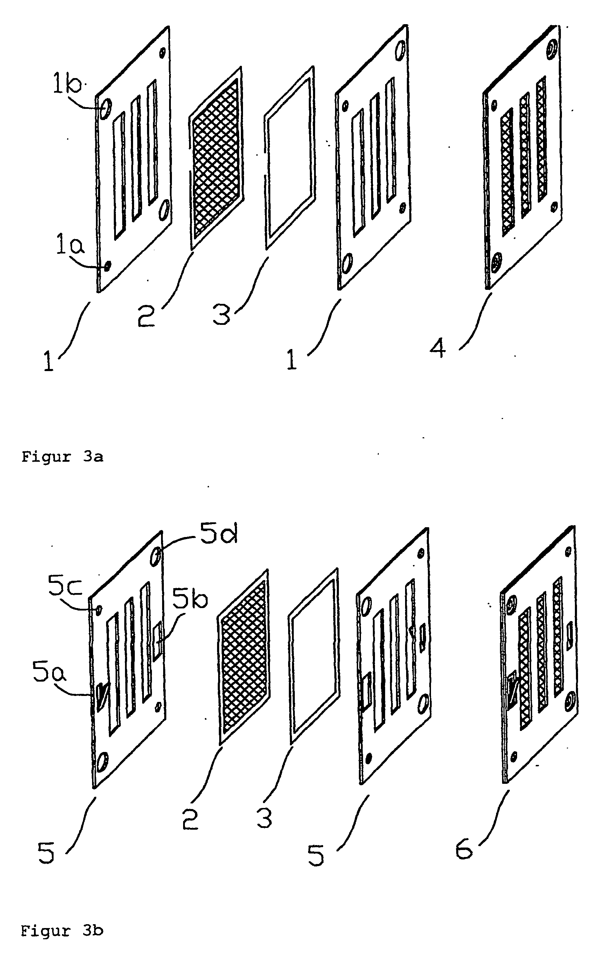

Die Figuren 3a bis 3c verdeutlichen in einem ersten Ausführungsbeispiel den Aufbau eines erfindungsgemäßen Brennstoffzellenstapels aus einzelnen Elementen. Die Membran-Elektroden-Einheiten (MEAs) 2 sind in Kartuschen 4, 6 vormontiert. Die elektrische Isolierung der Kartuschenplatten 1, bzw. 5 erfolgt über eine MEA-Flachdichtung 3. Die Kartuschen 4, 6 sind im Stack so angeordnet, daß je zwei Kartuschen über einen gemeinsamen Anoden- bzw. Kathodenraum in Kontakt stehen. Der Anoden- bzw. der Kathodenraum zwischen zwei Kartuschen 4, 6 bzw. einer Kartusche 4, 6 und einer Endplatte 10, 11 wird durch eine Aussparung 7b in der Flachdichtung 7 gebildet. Die Strömungsverteilung innerhalb der Medienräume und die Anpressung der MEA kann durch nichtleitende Einsätze 8 realisiert werden.
Der Einsatz 8 ist ein Kunststoffgewebe. Die Kartuschenplatten 1 und 5 verfügen über Bohrungen 1a, 1b, 5c, 5d zur Betriebsmittelweiterleitung. Die Bohrungen 1a, 5c sind kleiner als die Bohrungen 1b, 5d.
Die Abdichtung der Medienweiterleitung von z. B. einem Anodenraum zum nächsten Anodenraum erfolgt über einen Runddichtring (O-Ring) 9. Die Flächen in den Kartuschenplatten 1, 5, die sich unmittelbar um die kleinen Bohrungen 1a, 5c herum befinden, sind gleichzeitig Auflagefläche für den Dichtring 9. Der Dichtring 9 ist in dem Raum untergebracht, der von den Bohrungen 1b, 7a, 5d und 12a gebildet wird. Die Kartuschen 5 verfügen zur Stromweiterleitung über Kontaktlaschen 5a, die durch Ausbrüche hindurch 7c, 5b, 12b in den Rahmenelementen 7 den Kartuschenplatten 5 und den Einsätzen 12 die Kartuschen 4 und die Endplatten 10, 11 kontaktieren.
Die Dicke der Kartuschenplatten 1, 5 beträgt ca. 0,2 mm, die Dicke des Rahmenelements 7 ca. 0,8 mm, die des Einsatzes 12 0,5 bis 4,0 mm.

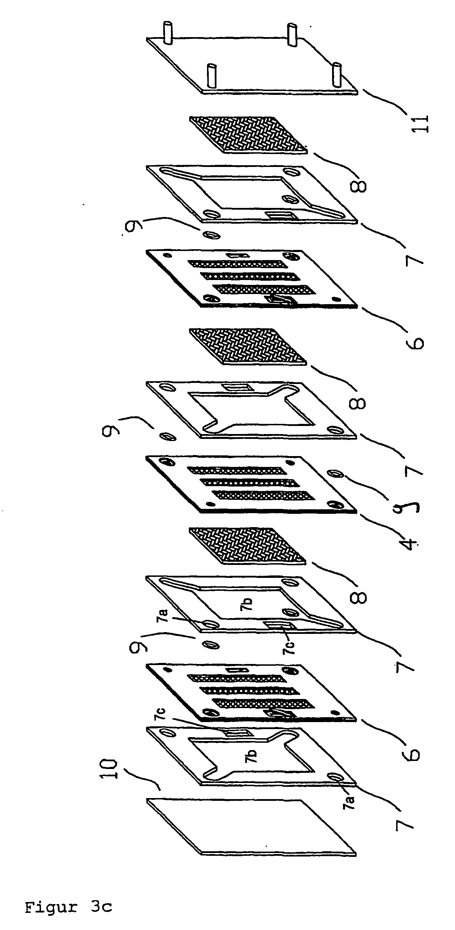

Die Figuren 4a bis 4c verdeutlichen in einem zweiten Ausführungsbeispiel den Aufbau eines erfindungsgemäßen Brennstoffzellenstapels aus einzelnen Elementen. Im Unterschied zu dem in Figur 3 dargestellten Brennstoffzellenstapel weisen die einzelnen Kartuschen 4 und 6 in diesem Ausführungsbeispiel in ihren einzelnen Elementen 1 und 5 nur jeweils zwei anstelle von vier Durchbrüchen auf. Die Durchbrüche für den Oxidationsmittelkanal sind weggefallen. Weiterhin sind anstelle von Flachdichtungen 7 mit in Aussparungen 7b vorgesehenen Einsätzen aus Kunststoffgewebe 8 teilweise Flachdichtungen 7(8) vorgesehen, die jetzt vollständig aus dem Gewebe 8 bestehen, und sowohl Durchbrüche für den Brennstoffmittelkanal als auch für die Lasche 5a aufweisen.

Anstelle der durchgehenden Oxidationsmittelkanäle gelangt das Oxidationsmittel bei dieser Ausführungsform direkt von den Kanten der Flachdichtung 7(8) in den entsprechenden Kathodenraum. Das Oxidationsmittel wird dabei über Ventilatoren in die Gewebe 7(8) eingeleitet. Bei kleinen Leistungen reicht es aber auch aus, ein Gewebe 7(8) mit einer Dicke von 2 bis 4 mm zu wählen, ohne dass ein Ventilator eingesetzt werden muß. Sofern nicht mit Oxidationsmittel unter Umgebungsdruck gearbeitet wird, kann die gesamte Brennstoffzelleneinheit auch an einen großen Verteilerkanal bzw. einen Sammelkanal angeschlossen werden, der unter einem Überdruck steht.

Alternativ kann anstelle eines Kunststoffgewebes für die Dichtung 7(8) auch eine Kunststoffplatte mit Kanälen oder dergleichen eingesetzt werden.

Damit ergeben sich folgende Vorteile für die Erfindung:
- es ist eine sehr flache Bauweise < 1,5 mm pro Einzelzelle realisierbar;
- es ist keine externe Verdrahtung trotz gemeinsamer Anoden- und Kathodenräume notwendig;
- der Runddichtring (O-Ring) überbrückt direkt 4 Dichtungsübergänge bzw. Bauteilflächen, und sorgt für ein zuverlässiges Abdichten;
- es werden extrem wenige und zudem nur planare Bauteile benötigt.

### Legende für Figuren

| | |
|---|---|
| E, Eᵢ, Eₐ | Element, inneres Element, äußeres Element |
| Øᵢ, Øₐ | Durchmesser des Durchbruchs |
| | (i = innen liegend, a = außen liegend) |
| D | Dichtung |
| S₁, S₂ | Schichtdicke |
| 1 | Kartuschenplatte mit Gasverteilerstrukturen |
| | 1A = anodenseitig, 1K = kathodenseitig |
| | 1a = Durchbruch für Luftkanal |
| | 1b = Durchbruch für Brennstoffmittelkanal |
| 2 | Membran-Elektroden-Anordnung, MEA |
| 3 | Flachdichtung für MEA |
| 4 | Kartusche zusammengesetzt aus 1 + 2 + 3 + 1 |
| 5 | Kartuschenplatte mit Gasverteilerstrukturen |
| | 5A = anodenseitig, 5K = kathodenseitig mit |
| | 5a = Kontaktlasche |
| | 5b = Durchbruch für Lasche 5a |
| | 5c = Durchbruch für Oxidationsmittelkanal |
| | 5d = Durchbruch für Brennstoffmittelkanal |
| 6 | Kartusche zusammengesetzt aus 5 + 2 + 3 + 5 |
| 7 | Flachdichtung mit |
| | 7a = Durchbruch für Kontaktlasche 5a |
| | 7b = Aussparung für Einsatz 8 |
| 8 | Einsatz aus nicht leitendem Kunststoffgewebe |
| 7(8) | Flachdichtung, vollständig aus nicht leitendem Kunststoffgewebe mit |
| | 8a = Durchbruch für Lasche 5a |
| | 8b = Durchbruch für Brennstoffmittelkanal |
| 9 | O-Ring |
| 10 | Endplatte |
| 11 | Endplatte |
| 12 | Oxidationsmittelkanal |
| 13 | Brennstoffmittelkanal |

## Patentansprüche

1. Brennstoffzellenstapel, umfassend wenigstens drei benachbarte Elemente (E), die zur Bildung eines durchgängigen Kanals jeweils einen Durchbruch aufweisen,
**dadurch gekennzeichnet,**
- **daß** die Durchbrüche (Øₐ) der beiden außen liegenden Elemente (Eₐ) kleiner sind als der Durchbruch (Øᵢ) des innen liegenden Elements, bzw. kleiner sind als die Durchbrüche der innen liegenden Elemente (Eᵢ), und
- **daß** nur eine Dichtung (D) zur Abdichtung des gebildeten Kanals zwischen den außen liegenden Elementen (Eₐ) vorgesehen ist.

2. Brennstoffzellenstapel nach vorhergehendem Anspruch,
**dadurch gekennzeichnet,**
**daß** die Durchbrüche der außen liegenden Elemente gleich große Durchmesser aufweisen.

3. Brennstoffzellenstapel nach einem der vorhergehenden Ansprüche,
**dadurch gekennzeichnet,**
**daß** die Durchbrüche der innen liegenden Elemente gleich große Durchmesser aufweisen.

4. Brennstoffzellenstapel nach einem der vorhergehenden Ansprüche,
**dadurch gekennzeichnet,**
**daß** die Schichtdicke einer einzelnen Brennstoffzelleneinheit kleiner als 2 mm, insbesondere kleiner als 1,5 mm ist.

5. Brennstoffzellenstapel nach einem der vorhergehenden Ansprüche mit einem O-Ring als Dichtung.

6. Brennstoffzellenstapel nach einem der vorhergehenden Ansprüche,
**dadurch gekennzeichnet,**
**daß** jedes Element wenigstens zwei Durchbrüche zur Bildung eines durchgehenden Kanals aufweist, insbesondere einen für den Brennstoff und einen für das Oxidationsmittel.

7. Brennstoffzellenstapel nach einem der vorhergehenden Ansprüche mit einer Flachdichtung und vier Elementen mit Gasverteilerstrukturen zur Betriebsstoffverteilung als benachbarte Elemente.

8. Brennstoffzellenstapel nach einem der vorhergehenden Ansprüche,
**dadurch gekennzeichnet,**
**daß** ein Element einen zusätzlichen Durchbruch zur elektrischen Kontaktierung der beiden benachbarten Elemente aufweist.

9. Brennstoffzellenstapel nach einem der vorhergehenden Ansprüche, mit einem nichtleitenden poröses Gewebe oder einem Netz als innenliegendes Element (Eᵢ).

## Claims

1. Fuel cell stack, comprising at least three adjacent elements (E) that each have an opening to form a through-channel,
**characterized in that**
- the openings (Øₒ) of the two outer elements (Eₒ) are smaller than the opening (Øᵢ) of the inner element, and are smaller than the openings of the inner elements (Eᵢ), and
- there is only one seal (S) for sealing the channel formed between the outer elements (Eₒ).

2. Fuel-cell stack in accordance with the preceding claim,
**characterized in that**
the openings of the outer elements have the same diameter.

3. Fuel-cell stack in accordance with one of the preceding claims,
**characterized in that**
the openings of the inner elements have the same diameter.

4. Fuel-cell stack in accordance with one of the preceding claims,
**characterized in that**
the layer thickness of a separate fuel-cell unit is less than 2 mm and, in particular, is less than 1.5 mm.

5. Fuel-cell stack in accordance with one of the preceding claims, with an O-ring as a seal.

6. Fuel-cell stack in accordance with one of the preceding claims,
**characterized in that**
each element has at least two openings for forming a through-channel, particularly one for the fuel and one for the oxidation agent.

7. Fuel-cell stack in accordance with one of the preceding claims, with a flat gasket ring and four elements with gas distributor structures for fuel distribution as adjacent elements.

8. Fuel-cell stack in accordance with one of the preceding claims,
**characterized in that**
one element has an additional opening for electrical contacts for the two adjacent elements.

9. Fuel-cell stack in accordance with one of the preceding claims, with a nonconducting, porous texture or a lattice as inner element (Eᵢ).

## Revendications

1. Empilement de piles à combustible, comprenant au moins trois éléments adjacents (E) qui présentent chacun une ouverture pour la formation d'un canal de passage,
**caractérisé en ce que**
- les ouvertures (Φₐ) des deux éléments extérieurs (Eₐ) sont plus petites que l'ouverture (Φᵢ) de l'élément intérieur et/ou sont plus petites que les ouvertures des éléments intérieurs (Eᵢ), et
- il est prévu uniquement un joint (D) pour le calfeutrage du canal formé entre les éléments extérieurs (Eₐ) .

2. Empilement de piles à combustible selon la revendication précédente,
**caractérisé en ce**
**que** les ouvertures des éléments extérieurs présentent un diamètre identique.

3. Empilement de piles à combustible selon l'une des revendications précédentes,
**caractérisé en ce**
**que** les ouvertures des éléments intérieurs présentent un diamètre identique.

4. Empilement de piles à combustible selon l'une des revendications précédentes,
**caractérisé en ce**
**que** l'épaisseur de couche d'une unité individuelle de pile à combustible est inférieure à 2 mm, en particulier inférieure à 1,5 mm.

5. Empilement de piles à combustible selon l'une des revendications précédentes, avec un anneau torique d'étanchéité comme joint.

6. Empilement de piles à combustible selon l'une des revendications précédentes,
**caractérisé en ce que**
chaque élément présente au moins deux ouvertures pour la formation d'un canal continu, en particulier une ouverture pour le combustible et une pour l'agent oxydant.

7. Empilement de piles à combustible selon l'une des revendications précédentes, avec un joint plat et quatre éléments avec des structures de distribution de gaz pour la distribution de matières consommables en tant qu'éléments adjacents.

8. Empilement de piles à combustible selon l'une des revendications précédentes,
**caractérisé en ce**
**qu'**un élément présente une ouverture supplémentaire pour la connexion électrique des deux éléments adjacents.

9. Empilement de piles à combustible selon l'une des revendications précédentes, avec un tissu poreux non-conducteur ou un filet comme élément intérieur (Eᵢ).
